# EUROPÄISCHE PATENTSCHRIFT

(11) **EP 0 685 147 B1**
(45) Veröffentlichungstag und Bekanntmachung des Hinweises auf die Patenterteilung: **01.07.1998**
(21) Anmeldenummer: 95107065.5
(22) Anmeldetag: 10.05.1995
(51) Int. Cl.: A01D 41/14

(54) **Selbstfahrender Mähdrescher mit Schrägfördererkanal**
Combine, with inclined conveyor
Moissonneuse-batteuse à élévateur incliné

(30) Priorität: 03.06.1994 DE 4419436
(43) Veröffentlichungstag der Anmeldung: 06.12.1995
(73) Patentinhaber: CLAAS Kommanditgesellschaft auf Aktien, 33428 Harsewinkel (DE)
(72) Erfinder: Hamann, Gerhard, D-33428 Harsewinkel (DE)

(56) Entgegenhaltungen:
- EP-A- 0 421 042
- FR-A- 2 098 092
- FR-A- 2 468 292
- GB-A- 2 169 785
- US-A- 3 474 606
- US-A- 3 535 859
- US-I- B 549 244

## Beschreibung

Die vorliegende Erfindung betrifft einen selbstfahrenden Mähdrescher mit einem vorderen Schneidwerk, das über einen Schrägfördererkanal höhenverlagerbar mit dem Hauptrahmen des Mähdreschers verbunden ist.

Bekannte selbstfahrende Mähdrescher werden im Normalfall vom Hersteller mit einer Standardreifengröße versehen. Entsprechend dieser Reifengröße, und zwar insbesondere der Höhe der Reifen der vorderen Antriebsachse sind die Anlenkpunkte des Schrägfördererkanals und des Mähtisches am Mähdrescherhauptrahmen so gewählt, daß der Mähtisch und damit die Messerschiene stets eine in etwa gleichbleibende Winkel- und Höhenlage zum Boden einnimmt. In der Praxis ist nun aber immer häufiger zu beobachten, daß die Landwirte vordere Antriebsreifen mit größeren bzw. kleineren Durchmessern einsetzen, wodurch sich die Winkellage des Mähtisches und damit die Winkellage des Messerbalkens mit vorgeordnetem Ährenheber zum Boden nachteilig verändert, so daß die Ährenheberspitzen durch unsachgemäßen Bodenkontakt deformiert werden oder eine ungünstige Stellung für die Aufnahme von Lagergetreide einnehmen.

Der vorliegenden Erfindung liegt daher die Aufgabe zugrunde, einen selbstfahrenden Mähdrescher der eingangs näher bezeichneten Art so auszubilden, daß dieser auf einfache Art und Weise an die vom Betreiber eines Mähdreschers gewählte Reifengröße für die vordere Triebachse angepaßt werden kann.

Diese Aufgabe wird dadurch gelöst, daß der Schrägfördererkanal zweigeteilt ist und einen vollflächig durchlaufenden Boden sowie zwei Seitenwände tragende Abdeckungen aufweist, wobei die Seitenwände mit dem Boden einendig fest verbunden sind. Aufgrund dieser Zweiteiligkeit des Schrägfördererkanals kann die Winkellage der beiden Kanalteile zueinander in Abhängigkeit von der zum Einsatz kommenden Reifengröße verändert werden, so daß der Schnittwinkel des Schneidwerkes zum Boden optimal angepaßt werden kann. Zum anderen garantiert der vollflächig durchlaufende Boden einen sauberen Einzug des Gutes, da nämlich keine Staukante im Bodenbereich gebildet wird.

Um zu erreichen, daß sich die beiden Schrägfördererkanalteile immer dichtend einander anschließen, überlappen die Seitenwände jeder Schrägfordererkanalseitenwand ebenso wie die beiden oberen Abdeckungen einander.

Es ist empfehlenswert, wenn die beiden oberen Abdeckungen die Winkellage der beiden Schrägfordererkanalteile mit einander fixierende Einrichtungen aufweisen, in dem sowohl an den vorderen als auch an den hinteren oberen Abdeckungen in deren aneinander angrenzenden Bereichen Konsolen befestigt sind, wobei miteinander korrespondierende Konsolen beide Abdeckungen über Spannschrauben miteinander verbunden sind. Durch Verdrehen dieser Spannschrauben ist es jetzt möglich, ohne großen Aufwand die Winkellage der beiden Kanalteile zueinander zu verändern.

Als zusätzliche Sicherung der Stellung der beiden Kanalteile weisen die Seitenwände eines Kanalteiles im Überlappungsbereich zumindest je ein bogenförmiges Langloch auf wobei die benachbarten Seitenwände des anderen Kanalteiles mit Durchgangsbohrungen versehen sind, die mit den Langlöchern zusammen wirken. Neben der zusätzlichen Sicherung der Stellung der beiden Kanalteile zueinander wird durch eine solche Anordnung gleichzeitig eine feste Anlage der miteinander korrespondierenden Seitenwände erreicht, so daß kein Gut nach außen auftreten kann.

Da der Boden des zweigeteilten Schrägfördererkanals durchlaufend ist, knickt dieser je nach Winkelstellung der übrigen Kanalteile zueinander mehr oder weniger durch. Um in diesem Bereich eine Verstärkung zu erhalten, weist der durchlaufende Boden Verstärkungsstreben auf, von denen je zwei einer Förderkanalseite zugeordnete Streben im Überlappungsbereich der Seitenwände einander ebenfalls überlappen und mittels eines Bolzens miteinander verbunden sind.

Im folgenden soll die Erfindung anhand eines Ausführungsbeispieles und zweier dieses schematisch darstellender Figuren näher erläutert werden. Dabei zeigt:
- Figur 1: den vorderen einzugsseitigen Teil eines selbstfahrenden Mähdreschers und
- Figur 2: den in Figur 1 dargestellten Schrägfördererkanal in vergrößerter perspektivischer Darstellung.
- Figur 3: den Mähbalkenbereich in der Seitenansicht in verschiedenen Lagen.

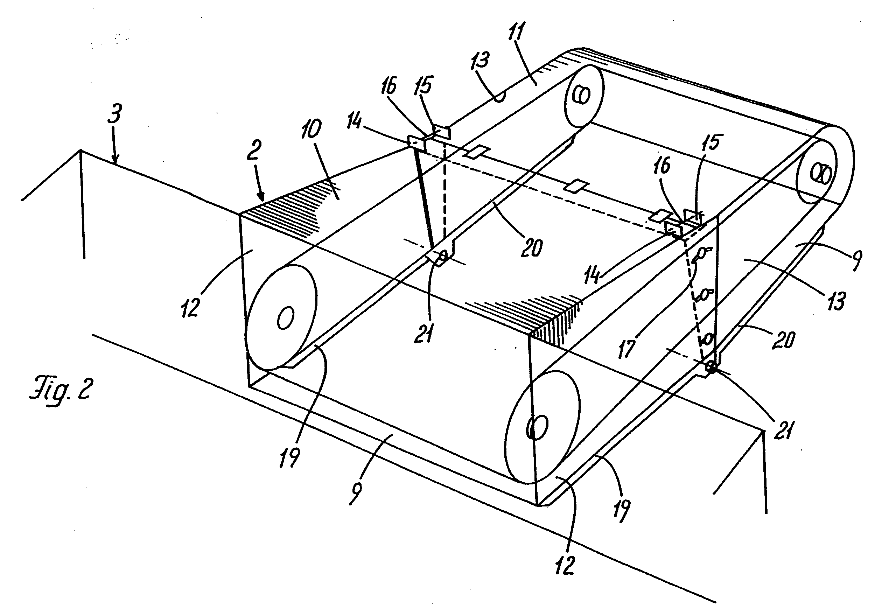

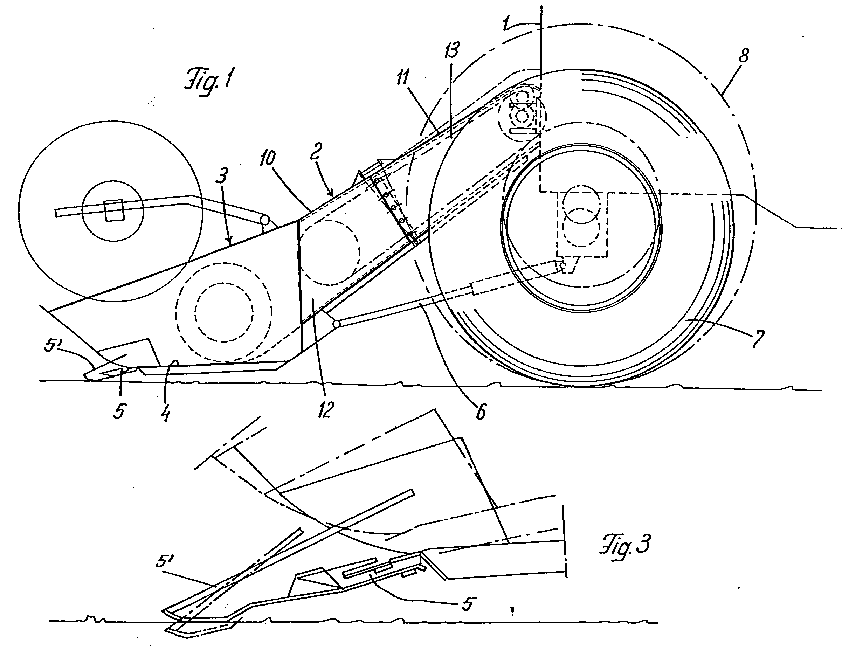

Mit 1 ist der Hauptrahmen eines nicht näher dargestellten selbstfahrenden Mähdreschers bezeichnet, an den ein Schrägfördererkanal 2 einendig schwenkbar aufgehängt ist. Das dem Hauptrahmen 1 entfernt liegende Ende des Schrägfördererkanals trägt über an sich bekannte Schnellkupplungen den Mähtisch 3. Dieser weist in bekannter Weise einen Schneidwerksboden 4 und einen Messerbalken 5 mit angebauten Ährenhebern 5'auf. Über eine hydraulische Kolbenzylindereinheit 6, die einerseits mit dem Hauptrahmen 1 und andererseits mit dem Mähtisch 3 verbunden ist, kann die Höhenlage des Mähtisches 3 zum Ackerboden verändert werden. Dabei ändert sich auch geringfügig die Winkellage des Messerbalkens 5 zum Ackerboden geringfügig, was aber keinerlei Auswirkung auf den Schneidvorgang selbst hat. Anders verhält es sich jedoch, wenn die vom Hersteller gelieferten Reifen 7 vom Mähdrescherbetreiber gegen Reifen 8 wesentlich größeren Durchmessers ersetzt werden. In einem solchen Fall ändert sich die Winkellage des Schneidwerksbodens 4 und des Messerbalkens 5 zum Ackerboden ganz erheblich. Um dies ausgleichen zu können, ist der Schrägfördererkanal 2 zweigeteilt. Er besteht aus einem unteren durchlaufenden ebenflächigen Boden 9 und zwei oberen Abdeckungen 10 und 11. Die oberen Abdeckungen 10 und 11 weisen Seitenwandteile 12 und 13 auf, die mit dem ebenflächigen Boden 9 beispielsweise durch Verschweißung fest verbunden sind. Wie aus der Figur 2 zu erkennen ist, überlappen einander sowohl die Seitenwandteile 12 und 13 als auch die oberen Abdeckungen 10 und 11. Um die Winkellage der beiden Schrägfördererkanalteile zueinander ändern zu können, sind im Überlappungsbereich der oberen Abdeckungen, und zwar in deren Seitenbereichen Konsolen 14 und 15 angeordnet, die über Spannschrauben 16 miteinander in Verbindung stehen. Durch Verdrehen dieser Spannschrauben 16 kann dann auf einfache Art und Weise die Winkellage der beiden Schrägfördererkanalteile verändert werden, und zwar in Anpassung an die vom Betreiber gewählten Reifen für die vordere angetriebene Achse. Als zusätzliche Sicherung der Winkellage der beiden Schrägfördererkanalteile zueinander sind die Seitenwände 12 und 13 in ihrem Trennbereich über lösbare Mittel gegeneinander verspannt. Aus diesem Grunde weisen die Wandteile 12 eine Teihe von Löchern 17 auf, die den Verstellbereich der Kanalteile zueinander begrenzen. Mit dem durchlaufenden ebenflächigen Boden 9 sind im äußeren Bereich Verstärkungsstreben 19 und 20 fest verschweißt. Im Überlappungsbereich der Seitenwände sind Verstärkungsstreben 19 und 20 über Bolzen 21 miteinander gelenkig verbunden.

## Patentansprüche

1. Selbstfahrender Mähdrescher mit einem vorderen Schneidwerk (4, 5, 5'), das über einen Schrägfördererkanal (2) höhenverlagerbar mit dem Hauptrahmen (1) des Mähdreschers verbunden ist,
**dadurch gekennzeichnet,**
daß der Schrägfördererkanal (2) zweigeteilt ist und einen vollflächig durchlaufenden Boden (9) sowie zwei Seitenwände (12 und 13) tragende Abdeckungen (10 und 11) aufweist, wobei die Seitenwände (12 und 13) mit dem Boden (9) einendig fest verbunden sind.

2. Selbstfahrender Mähdrescher nach Anspruch 1,
**dadurch gekennzeichnet,**
daß die Seitenwände (12 und 13) ebenso wie die oberen Abdeckungen (10 und 11) einander überlappen.

3. Selbstfahrender Mähdrescher nach den Ansprüchen 1 und 2,
**dadurch gekennzeichnet,**
daß die oberen Abdeckungen (10 und 11) der zwei Schrägfördererkanalteile zueinander fixierende Einrichtungen aufweisen.

4. Selbstfahrender Mähdrescher nach den Ansprüchen 1 bis 3,
**dadurch gekennzeichnet,**
daß sowohl an der vorderen als auch an der hinteren oberen Abdeckung (10,11) in deren einander angrenzenden Bereichen Konsolen (14 und 15) befestigt sind, wobei miteinander korrespondierende Konsolen (14 und 15) beider Abdeckungen (10 und 11) über Spannschrauben (16) miteinander verbunden sind.

5. Selbstfahrender Mähdrescher nach den Ansprüchen 1 bis 4,
**dadurch gekennzeichnet,**
daß die Seitenwände (12) eines Kanalteiles im Trennbereich zumindest je eine bogenförmige Lochung (17) aufweisen und benachbarte Seitenwände (13) mit den Lochungen (17) zusammen wirkende Durchdringungen aufweisen.

6. Selbstfahrender Mähdrescher nach den Ansprüchen 1 bis 5,
**dadurch gekennzeichnet,**
daß der durchlaufende Boden (9) Verstärkungstreben (19, 20) aufweist, von denen mindestens zwei einer Schrägfördererkanalseite zugeordnete Streben (19, 20) im Trennbereich der Seitenwände (12, 13) und im Bodenbereich mittels eines Bolzens (21) miteinander verbunden sind.

## Claims

1. A self-propelled combine harvester having a front cutting mechanism (4, 5, 5') which is connected displaceably in respect of height by way of an inclined conveyor passage (2) to the main frame (1) of the combine harvester characterised in that the inclined conveyor passage (2) is divided into two and has a bottom (9) which is continuous over its entire surface area and two covers (10 and 11) carrying side walls (12 and 13), wherein the side walls (12 and 13) are fixedly connected to the bottom (9) at one end.

2. A self-propelled combine harvester according to claim 1 characterised in that the side walls (12 and 13) overlap each other just like the upper covers (10 and 11).

3. A self-propelled combine harvester according to claims 1 and 2 characterized in that the upper covers (10 and 11) of the two inclined conveyor passage portions have mutually fixing devices.

4. A self-propelled combine harvester according to claims 1 to 3 characterised in that brackets (14 and 15) are fixed both to the front and to the rear upper cover (10, 11) in their mutually adjoining regions, wherein mutually corresponding brackets (14 and 15) of the two covers (10 and 11) are connected together by way of tightening screws (16).

5. A self-propelled combine harvester according to claims 1 to 4 characterized in that in the separation region the side walls (12) of a passage portion have at least one respective arcuate opening (17) and adjacent side walls (13) have means passing therethrough co-operating with the openings (17).

6. A self-propelled combine harvester according to claims 1 to 5 characterized in that the continuous bottom (9) has reinforcing struts (19, 20) of which at least two struts (19, 20) associated with a side of the inclined conveyor passage are connected together in the separation region of the side walls (12, 13) and in the bottom region by means of a pin (21).

## Revendications

1. Moissonneuse-batteuse automotrice comportant un dispositif de coupe avant (4, 5, 5') qui est lié au châssis principal (1) de la moissonneuse-batteuse par l'intermédiaire d'un élévateur incliné (2) avec possibilité de réglage en hauteur, caractérisée par le fait que l'élévateur incliné (2) est divisé en deux parties et comporte un fond (9) continu couvrant toute la surface ainsi que deux capots (10 et 11) qui portent des parois latérales (12 et 13), les parois latérales (12 et 13) étant liées fermement au fond à une extrémité.

2. Moissonneuse-batteuse selon la revendication 1, caractérisée par le fait que les parois latérales (12 et 13) ainsi que les capots (10 et 11) supérieurs se chevauchent.

3. Moissonneuse-batteuse selon les revendications 1 et 2, caractérisée par le fait que les capots (10 et 11) supérieurs des deux parties d'élévateur incliné sont pourvus de dispositifs assurant le positionnement réciproque.

4. Moissonneuse-batteuse selon les revendications 1 à 3, caractérisée par le fait que des pattes supports (14 et 15) sont fixées au capot (10, 11) supérieur antérieur et au capot (10, 11) supérieur postérieur, dans des zones mutuellement voisines de ces éléments, les pattes supports (14 et 15) qui se correspondent des deux capots (10 et 11) étant liées l'une à l'autre par des vis de serrage (16).

5. Moissonneuse-batteuse selon les revendications 1 à 4, caractérisée par le fait que les parois latérales (12) d'une partie de canal présentent dans la région de séparation au moins chacune une ouverture en arc de cercle (17) et que des parois latérales voisines (13) voisines présentent des trous traversants qui coopèrent avec les ouvertures (17).

6. Moissonneuse-batteuse selon les revendications 1 à 5, caractérisée par le fait que le fond continu (9) comporte des longerons de renfort (9, 10) parmi lesquels au moins deux longerons (19, 20) associés à un côté de canal d'élévateur incliné sont liés l'un à l'autre par une vis (21) dans la région de séparation des parois latérales (12, 13) et dans la région du fond.
